# EUROPEAN PATENT APPLICATION

(11) **EP 2 025 376 A1**
(43) Date of publication of application: **18.02.2009**
(21) Application number: 08252307.7
(22) Date of filing: 04.07.2008
(51) Int. Cl.: A63F 13/00

(54) **Game apparatus, control method thereof, and program**

(30) Priority: 24.07.2007 JP 2007192628
(71) Applicant: Kabushiki Kaisha Bandai, Taito-ku, Tokyo (JP); Wiz Co., Ltd., Chuo-ku, Tokyo (JP)
(72) Inventor: Murase, Kazue, Tokyo (JP); Kimura, Hiromi, Tokyo (JP); Aratani, Hideki, Tokyo (JP); Moriyama, Megumi, Tokyo (JP)
(74) Representative: Nicholls, Michael John

(57) **Abstract**

There is provided a game apparatus, which includes a storage unit and a communication unit which communicates with another game apparatus. This game apparatus controls the storage unit to store a character group including two characters of a first type and one or more characters of a second type, and to store a parameter value indicating a relationship between the character group and that of the other game apparatus. Furthermore, when the parameter value satisfies the predetermined condition and when one of the one or more characters of the second type is selected, the character group is updated so that the selected character and a predetermined character of the second type of the other game apparatus are set as new, two characters of the first type, and only newly generated one or more characters of the second type are set as the one or more characters of the second type.

## Description

The present invention relates to a game apparatus, which communicates with another game apparatus, a control method thereof, and a program.

### Description of the Related Art

A game apparatus which allows a player to grow a character of his or her own is known (see Japanese Patent No. 3457285). With this game apparatus, the game progresses when a player grows a single character by periodically executing predetermined operations from the birth of that character.

However, with this game apparatus, the game progresses for the purpose of growing a character itself. For this reason, the player cannot make his or her own game apparatus communicate with another game apparatus to receive a character from that game apparatus. Therefore, for example, a character grown by the player and that grown by a player of the other game apparatus cannot be married.

The present invention has been made in consideration of the above situation, and is characterized in that a player can make his or her own game apparatus communicate with another game apparatus to receive a character from that game apparatus.

According to an aspect of the present invention, there is provided a game apparatus, which comprises a storage unit and a communication unit which communicates with another game apparatus, comprising:
a first storage control unit which controls the storage unit to store a character group including two characters of a first type and one or more characters of a second type;
a second storage control unit which controls the storage unit to store a parameter value indicating a relationship between the character group and a character group of the other game apparatus;
a first update unit which updates the parameter value when a communication with the other game apparatus is made;
a first selection unit which selects one of the one or more characters of the second type as a character that remains at the character group;
a first determination unit which determines whether or not the parameter value satisfies a predetermined condition;
a character generation unit which generates one or more new characters of the second type; and
a second update unit which updates the character group so as to set, when the first determination unit determines that the parameter value satisfies the predetermined condition and when the first selection unit makes the selection, the character selected by the first selection unit and a predetermined character of the second type of the other game apparatus as the new, two characters of the first type, and to set only one or more characters of the second type newly generated by the character generation unit as the one or more characters of the second type.

According to another aspect of the present invention, there is provided a method of controlling a game apparatus, which comprises a storage unit and a communication unit which communicates with another game apparatus, the method comprising the steps of:
controlling the storage unit to store a character group including two characters of a first type and one or more characters of a second type;
controlling the storage unit to store a parameter value indicating a relationship between the character group and a character group of the other game apparatus;
updating the parameter value when a communication with the other game apparatus is made;
selecting one of the one or more characters of the second type as a character that remains at the character group;
determining whether or not the parameter value satisfies a predetermined condition;
generating one or more new characters of the second type; and
updating the character group so as to set, when it is determined in the step of determining that the parameter value satisfies the predetermined condition and when the selection is made in the step of selecting, the character selected in the step of selecting and a predetermined character of the second type of the other game apparatus as the new, two characters of the first type, and to set only one or more characters of the second type newly generated in the step of generating as the one or more characters of the second type.

Further features of the present invention will become apparent from the following description of non-limiting exemplary embodiments with reference to the attached drawings, in which:

Fig. 1 is a block diagram showing the basic arrangement of a game apparatus according to the first embodiment;

Fig. 2 is a flowchart showing the progress of a game according to the first embodiment;

Fig. 3 shows a window displayed on a display unit of the game apparatus according to the first embodiment;

Fig. 4 is a table showing data required to manage a character group;

Fig. 5 is a table showing data required to manage the character group;

Fig. 6 is a flowchart showing the detailed sequence of the processing in step S206 in Fig. 2;

Fig. 7 is a table showing the chum levels stored as some of user data in an internal storage device of the game apparatus according to the first embodiment;

Fig. 8 shows the transition of windows displayed when the game apparatus according to the first embodiment communicates with another game apparatus;

Fig. 9 is a flowchart showing the detailed sequence of the processing in step S610 in Fig. 6; and

Fig. 10 is a flowchart showing the detailed sequence of the event determination processing in step S205 in Fig. 2.

Preferred embodiments of the present invention will now be described with reference to attached drawings. Each embodiment described below will be helpful in understanding a variety of concepts from the generic to the more specific.

It should be noted that the technical scope of the present invention is defined by claims, and is not limited by each embodiment described below. In addition, not all combinations of the features described in the embodiments are necessarily required for realizing the present invention.

### [First Embodiment]

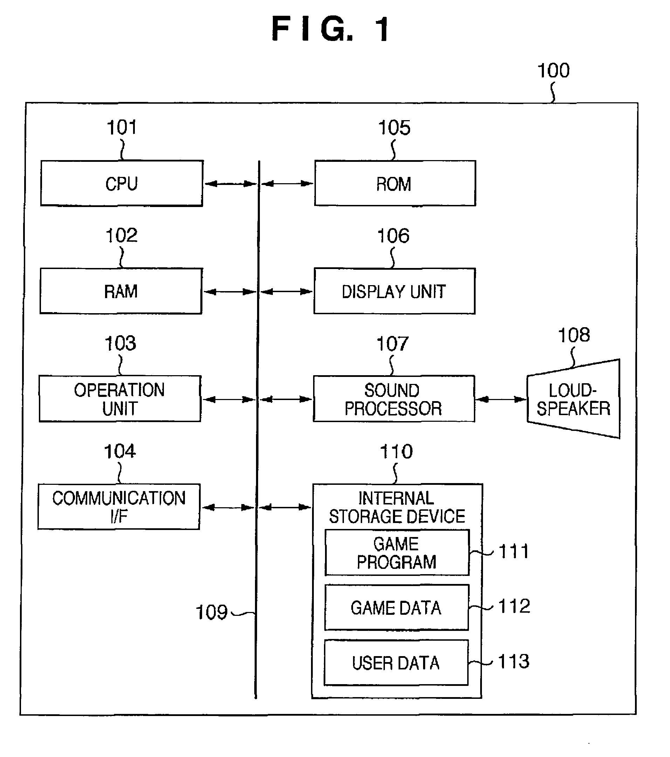

Fig. 1 shows the basic arrangement of a game apparatus 100 according to this embodiment. A CPU 101 controls the overall game apparatus 100 using programs, data, and the like stored in a RAM (Random Access Memory) 102 and ROM (Read-Only Memory) 105, and controls the progress of a game according to this embodiment. The RAM 102 comprises an area used to load a game program 111 and game data 112 stored in an internal storage device 110, and also a work area used when the CPU 101 executes various kinds of processing.

An operation unit 103 serves as an input unit which accepts inputs from the player. A communication I/F (interface) 104 serves as an I/F used to connect to another game apparatus via a cable (or wirelessly) or to connect to the Internet or LAN (Local Area Network). The ROM 105 stores a program for controlling the overall game apparatus 100 (e.g., a boot program of the game apparatus 100), data (e.g., setting data of the game apparatus 100), and the like. A display unit 106 comprises a CRT, liquid crystal panel, or the like, and serves as a display unit which displays windows associated with the game (e.g., those to be displayed during playing of the game and those used to make various settings).

A sound processor 107 generates BGM and effect sounds based on sound data included in the game data 112, and outputs the generated BGM, effect sounds, and the like to a loudspeaker 108.

The internal storage device 110 comprises a storage device that allows to read/write data, such as a hard disk, flash memory, or the like, and stores the aforementioned game program 111 and game data 112, and user data 113. The data stored in the internal storage device 110 are read out onto the RAM 102 as needed.

The game program 111 is a program for controlling the overall game. The game data 112 include data required to generate images of respective objects (characters, text, background pictures, etc.) that configure each game window, the aforementioned sound data, various parameters, and the like. When the player wants to play an online game by connecting the game apparatus 100 to a network, the game program 111 and game data 112 include a game program, data, and the like downloaded from a server, which provides such game program, on the network.

The user data 113 are data associated with the past game progress history of the player.
Reference numeral 109 denotes a bus which interconnects the aforementioned units.

The processing to be executed by the game apparatus 100 according to this embodiment with the aforementioned arrangement will be described below.

Prior to a description of the practical processing, the sequence of the game of the present invention will be briefly explained. In the present invention, the player manages one character group. The player undertakes events that take place during playing of the game, thereby growing characters that belong to the character group, and deepening bonds between the player and character group and between the characters in the character group.

This character group can be, for example, a family. In this case, the character group includes characters of a first type (i.e., parents) and those of a second type (i.e., children). The player looks after the children on behalf of the parents to raise the children and to deepen bonds with the family and between the characters in the family.

The player makes his or her own game apparatus 100 communicate with another game apparatus to have a relationship with another family. By repeating exchanges with the other family, the player can.deepen a relationship with that family.

When each child has grown up enough, the player can make the child marry a child of another closely related family. At this time, the player may take a child character from another game apparatus, or may give away the child character of the character group managed by himself or herself to the other game apparatus.

In the present invention, in the former case, the two married child characters become new parent characters, and the remaining characters are cleared from the character group. New child characters are born to the new parent characters, resulting in the birth of a new family (i.e., generation change occurs). The player looks after the children again on behalf of the parents to raise the children and to deepen bonds with the new family and between the parents and children in the new family.

In the latter case, the child character which has been given to the other game apparatus is cleared from the character group managed by the player.

The embodiment of the present invention will be described below taking as an example a case in which the character group managed by the player represents a family. Note that it is merely an example that the character group represents a family, and that the player looks after children on behalf of parents.

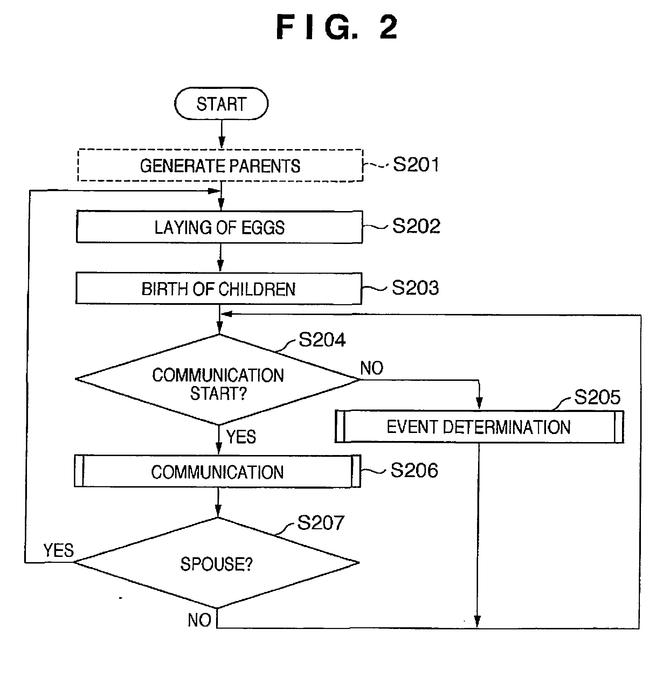

Fig. 2 is a flowchart showing the progress of the game according to this embodiment. Respective processes of the flowchart shown in Fig. 2 are implemented when the CPU 101 executes the game program 111 read out onto the RAM 102.

In step S201, the CPU 101 generates parent characters which belong to a character group managed by the player. Note that the process in step S201 is arbitrary, and no parent characters may exist in the first generation.

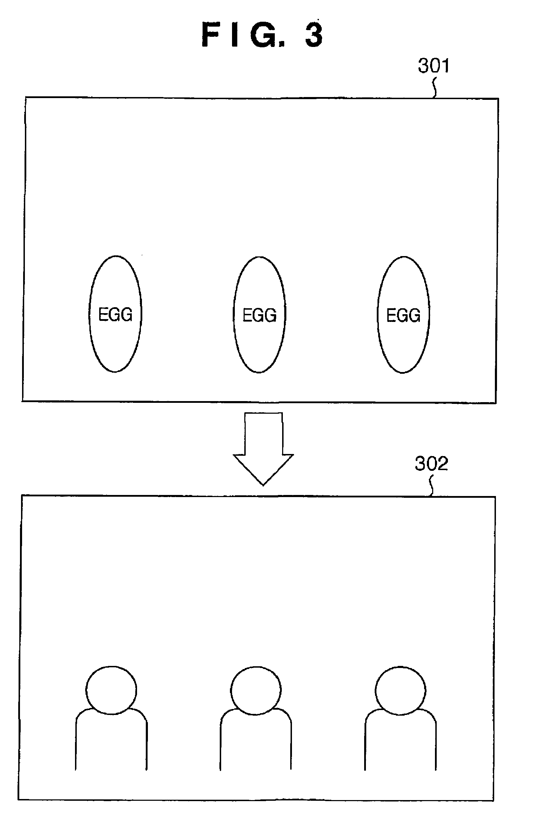

In step S202, the CPU 101 displays eggs on the display unit 106 (see a window 301 in Fig. 3). The number of eggs to be displayed is arbitrary, and may be determined based on a predetermined probability. However, assume that the number of eggs is three in this embodiment, for the sake of simplicity.

In step S203, the CPU 101 hatches child characters from the eggs and displays them on the display unit 106 (see a window 302 in Fig. 3). Then, the CPU 101 adds the born child characters to the character group. Note that the window 302 is a standby window of the game of this embodiment.

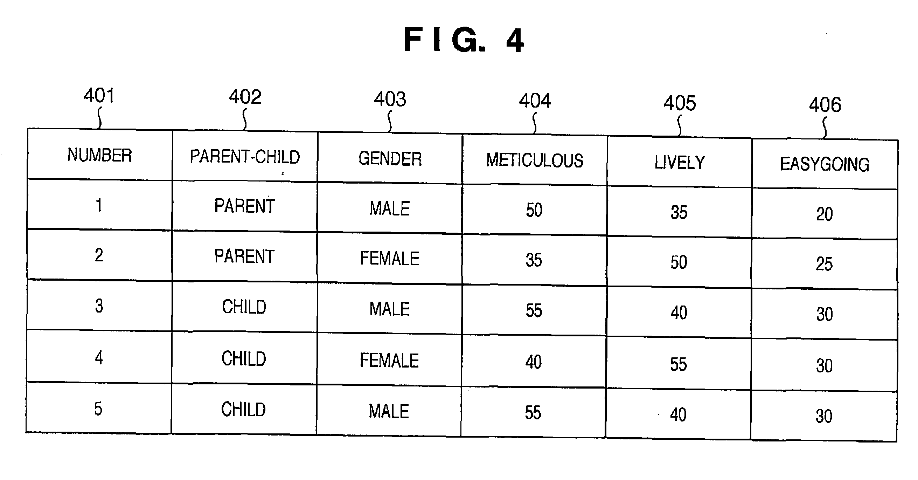

Data used to manage the character group (to be referred to as "management data" hereinafter) will be described below with reference to Fig. 4. The data used to manage the character group is temporarily stored in the RAM 102, and is stored as some of the user data 113 in the internal storage device 110 as needed.

As shown in Fig. 4, the management data includes a number field 401 indicating the number of each character, and a parent-child field 402 indicating the type of parent or child. The number indicated by the number field 401 is related to the display position of each character on the display unit 106. For example, in this embodiment, characters with numbers 1 and 2 (i.e., parent characters) (to be described like "characters #1 and #2" hereinafter) are not displayed on the window 302 (standby window). Character #3 is displayed at the lower central position on the window 302, character #4 is displayed at the lower left position on the window 302, and character #5 is displayed at the lower right position on the window 302.

The management data includes a gender field 403 indicating a gender as one of attributes of each character. In this embodiment, assume that the parents have different genders. However, this condition is not indispensable in this embodiment.

The management data may also include fields indicating the personality of each character. In this embodiment, the management data includes a meticulous field 404, lively field 405, and easygoing field 406, and these fields indicate "meticulous", "lively", and "easygoing" nature levels of each character.

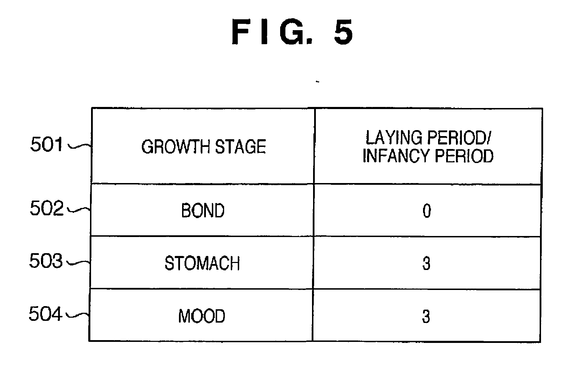

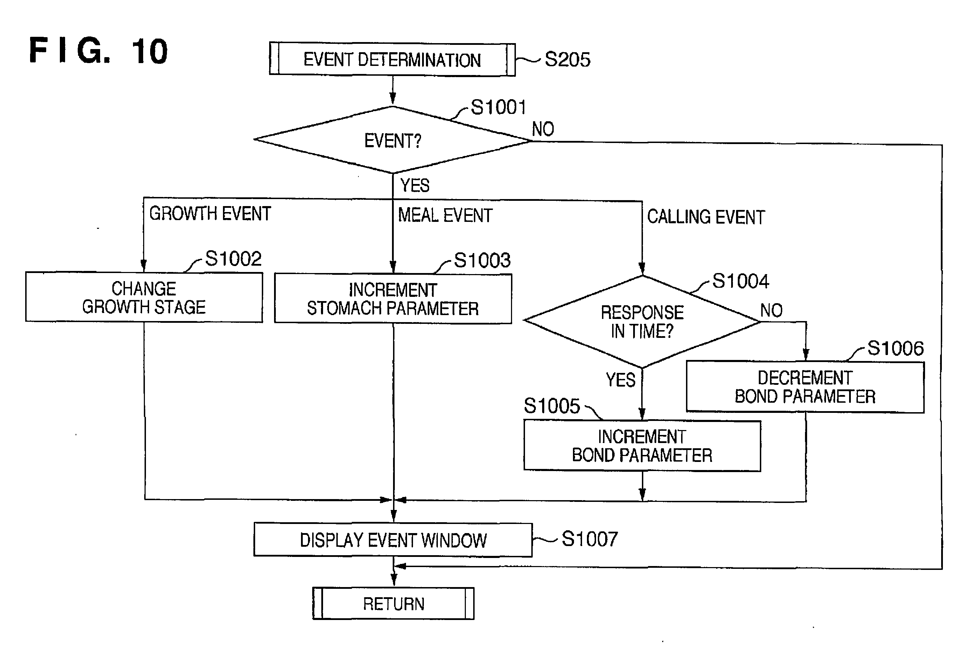

The management data also includes parameters common to the whole character group (see Fig. 5). Referring to Fig. 5, a growth stage field 501 indicates the stage of growth of respective characters. In the example of Fig. 5, the parent characters are in a "laying period", and the child characters are in an "infancy period". Other examples associated with the growth stage will be described later with reference to Fig. 10.

A bond field 502 indicates the depth of bond between the player and family (the character group managed by the player). A stomach field 503 indicates the full stomach level of the family, and a mood field 504 indicates the mood level of the family.

In this embodiment, the parameter values shown in Fig. 5 are common to the whole family. Alternatively, the game may be designed so that individual characters assume different values. In this case, the respective fields in Fig. 5 are assured for respective characters, as in Fig. 4.

Referring back to Fig. 2, the CPU 101 checks in step S204 if an instruction to start a communication with another game apparatus is received from the operation unit 103 (or communication I/F 104). If no such instruction is received, the CPU 101 executes determination of an event (details will be described later) in step S205, and the process returns to step S204. Thus, the CPU 101 repeats event determination until it accepts the communication start instruction.

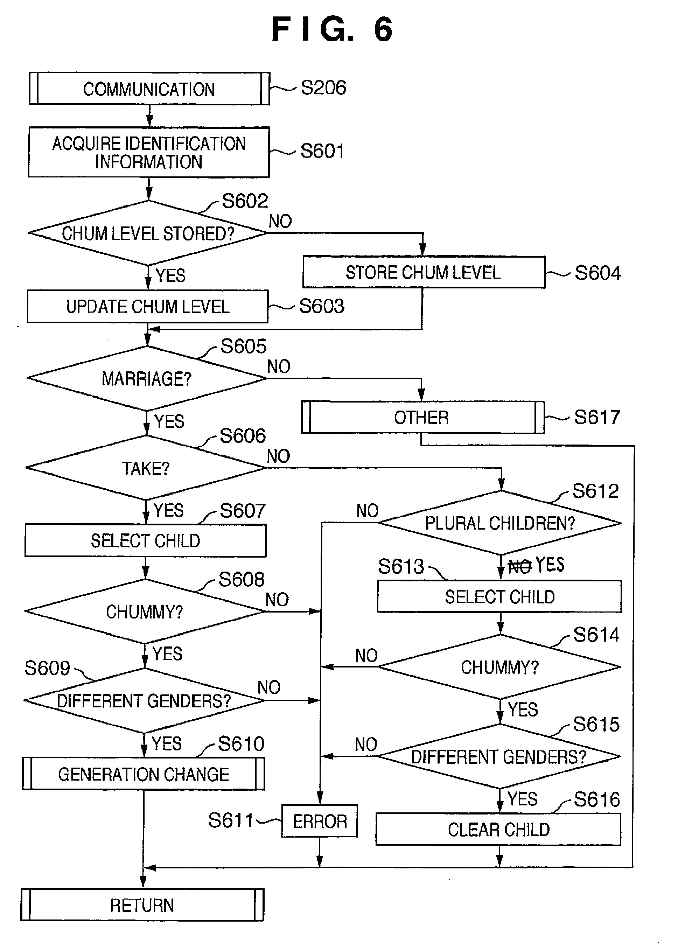

Upon reception of the communication start instruction, the CPU 101 executes processing associated with a communication in step S206. Details of this processing in step S206 will be described later with reference to Fig. 6. In the processing in step S206, one of the child characters may obtain a spouse character. In this case, characters other than the character that obtained the spouse and the spouse character are cleared from the character group. The character that obtained the spouse and the spouse character become new parent characters.

The CPU 101 checks in step S207 if a spouse character is obtained in step S206. If no spouse character is obtained, the process returns to step S204 to repeat the same processing.

If a spouse character is obtained in step S206, the process returns from step S207 to step S202. In step S202, the new parent characters produce eggs. In step S203, child characters are born. That is, if a spouse character is obtained in step S206, the character group is updated by the processes in steps S206, S207, S202, and S203. The updated character group includes the character that obtained the spouse and the spouse character as new parent characters, and also newly born child characters. In other words, if one of the child characters obtains a spouse character in step S206, the parent characters and other child characters at that time leave the character group, thus attaining a generation change.

If two or more child characters are born in step S203, these two or more child characters include those of a plurality of genders: male and female child characters. This is because, for example, if all two or more child characters are male characters, and those in the other game apparatus as a communication partner are also male characters, these child characters cannot marry those in the other game apparatus.

The detailed sequence of the processing in step S206 in Fig. 2 will be described below with reference to Fig. 6.

In step S601, the CPU 101 acquires identification information of a game apparatus as a communication partner from this game apparatus. The identification information is information unique to each game apparatus, and is, for example, a serial number of the game apparatus.

The CPU 101 checks in step S602 if a parameter value indicating the relationship between the family of the game apparatus 100 and that of the game apparatus as the communication partner (to be referred to as a "chum level" hereinafter) is available in user data 113. If the chum level is available, the process advances to step S603; otherwise, the process advances to step S604.

In step S603, the CPU 101 updates the chum level. In this embodiment, assume that the chum level is set to indicate the number of times of communications with the game apparatus as the communication partner. Hence, the CPU 101 increments the chum level by 1.

On the other hand, in step S604 the CPU 101 generates a new chum level, and stores the new chum level in the internal storage device 110 in association with the identification information acquired in step S601 as some of the user data 113.

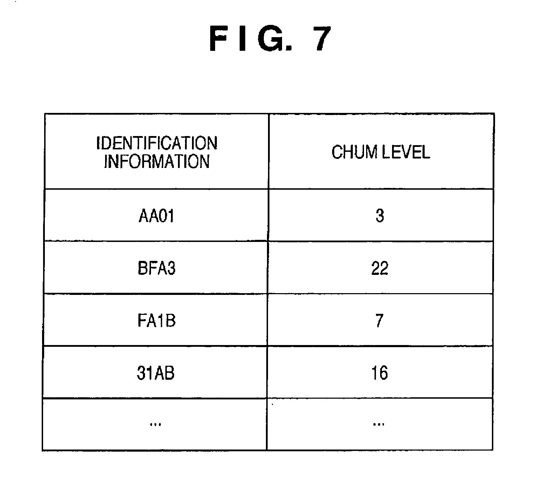

Fig. 7 shows the chum levels stored as some of the user data 113 in the internal storage device 110. As shown in Fig. 7, since the identification information and chum level are stored as a set, even when the game apparatus 100 alternately communicates with a plurality of other game apparatuses, it can hold the chum levels of the plurality of other game apparatuses.

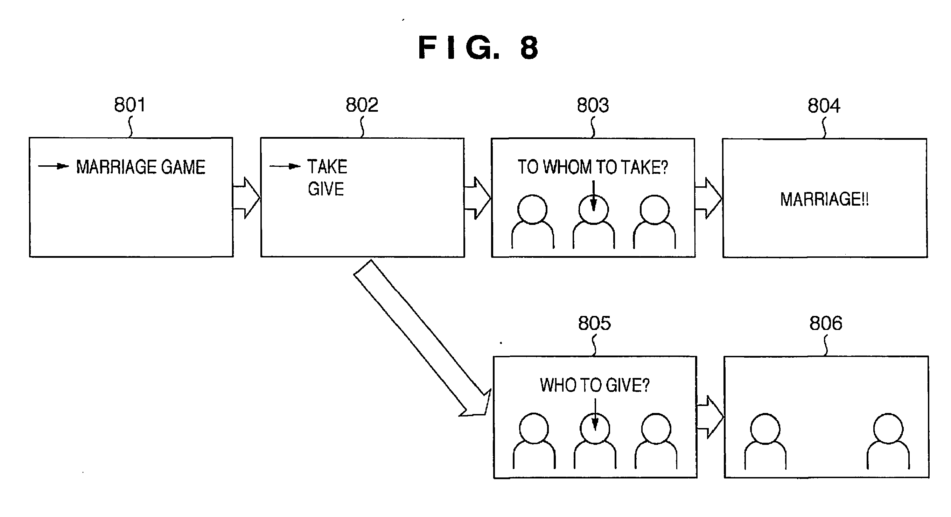

In step S605, the CPU 101 displays a menu window (see a window 801 in Fig. 8) on the display unit 106, and accepts a menu selection via the operation unit 103. If "marriage" is selected on the window 801, the process advances to step S606; if another item (e.g., "game") is selected, the process advances to step S617. In step S617, for example, an online battle game or the like is executed according to the selected contents.

In step S606, the CPU 101 displays a menu window associated with marriage (see a window 802 in Fig. 8) on the display unit 106. Then, the CPU 101 accepts, via the operation unit 103, a selection as to whether to take a spouse character or to give away a child character as a spouse character to the game apparatus as the communication partner. If "take" is selected on the window 802, the process advances to step S607; if "give" is selected, the process advances to step S612.

In step S607, the CPU 101 displays a window (see a window 803 in Fig. 8) that prompts the player to select a child character to marry. The CPU 101 then selects a child character to marry according to the player's operation.

The CPU 101 checks in step S608 if the family of the game apparatus 100 is chummy with that of the game apparatus as the communication partner by seeing if the chum level is equal to higher than a threshold (e.g., 20). If the family of the game apparatus 100 is chummy with that of the game apparatus as the communication partner, the process advances to step S609; otherwise, the process advances to step S611 to display an error window (not shown), and the marriage is not concluded. In the example of Fig. 7, since the game apparatus 100 has a chum level of 20 or more with a game apparatus having identification information "BFA3", the process advances to S609 if it is communicating with this game apparatus.

In step S609, the CPU 101 compares the gender of the child character selected in step S607 with that of a child character (i.e., a spouse character) selected in the game apparatus as the communication partner. If the two characters have different genders, the process advances to step S610; otherwise, the process advances to step S611 and the marriage is not concluded.

In step S610, the CPU 101 displays a window indicating that the marriage is concluded (see a window 804 in Fig. 8). Then, the CPU 101 acquires a spouse character from the game apparatus as the communication partner, and executes generation change processing (to be described in detail later). Although not shown, the game of this embodiment may be configured so that only when a child character in question is in a predetermined growth stage (e.g., a laying period), the marriage (and generation change) is realized; otherwise, the process advances to step S611 to execute the error processing.

If "give" is selected in step S606, the CPU 101 checks in step S612 if the character group includes a plurality of child characters. If the character group includes a plurality of child characters, the process advances to step S613; otherwise, the process advances to step S611 and the marriage is not concluded. The checking process in step S612 is to prevent the number of child characters included in the character group from becoming zero. If the number of child characters becomes zero, the generation change can never be made by taking a spouse character. However, if the number of child characters is permitted to be zero, the checking process in step S612 can be omitted. Even when the number of child characters becomes zero, the player can play the game again by, e.g., resetting it. Alternatively, the game of this embodiment may be configured so that when the number of child characters becomes zero, the parent characters produce eggs again.

In step S613, the CPU 101 displays a window that prompts the player to select a child character to give (see a window 805 in Fig. 8) on the display unit 106.

The CPU 101 checks in step S614 if the family of the game apparatus 100 is chummy with that of the game apparatus as the communication partner, as in step S608. If the family of the game apparatus 100 is chummy with that of the game apparatus as the communication partner, the process advances to step S615; otherwise, the process advances to step S611 and the marriage is not concluded.

In step S615, the CPU 101 compares the gender of the child character selected in step S613 with that of a child character (i.e., a match character) selected in the game apparatus as the communication partner. If the two characters have different genders, the process advances to step S616; otherwise, the process advances to step S611 and the marriage is not concluded.

In step S616, the CPU 101 clears the child character selected in step S613 from the character group. Also, the given child character is no longer displayed on the standby window, as indicated by a window 806 in Fig. 8. Although not shown, the game of this embodiment may be configured so that only when the child character is in a predetermined growth stage (e.g., a laying period), that child character is given (cleared); otherwise, the process advances to step S611 to execute the error processing, as in step S610.

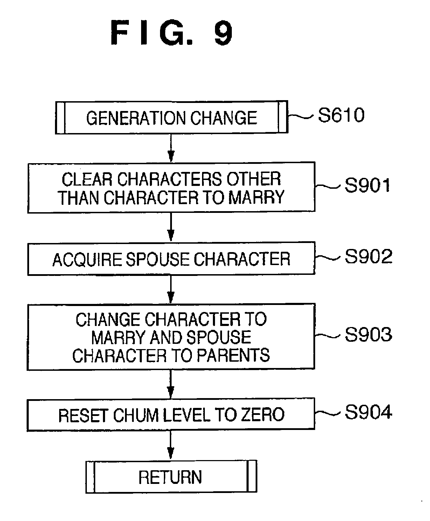

Fig. 9 is a flowchart showing the detailed sequence of the processing in step S610 in Fig. 6.

In step S901, the CPU 101 clears characters other than the character to marry (the character selected in step S607 in Fig. 6) from the management data shown in Fig. 4. As a result, the characters other than the character to marry are cleared from the character group. However, the data associated with the cleared characters need not be completely cleared from the internal storage device 110, and may be held as, for example, some of the user data 113.

In step S902, the CPU 101 acquires a spouse character from the game apparatus as the communication partner, and adds it to the management data shown in Fig. 4. Note that the spouse character itself may be acquired upon confirming the gender in step S609 in Fig. 6.

In step S903, the CPU 101 changes data in the gender field 403 of the character to marry and the spouse character from "child" to "parent". Also, the CPU 101 changes data in the number field 401 of the character to marry to "1", and that in the number field 401 of the spouse character to "2".

In step S904, the CPU 101 initializes (resets) the chum level shown in Fig. 7 to zero. This processing is executed to indicate that a new character group (i.e., a new family) generated by the generation change has never had contact with (communicated with) a family of another game apparatus. The CPU 101 may initialize other data (e.g., "bond" in the management data shown in Fig. 5) as needed.

With the above processing, the generation change is complete. When the generation change is made, the process advances from step S610 to step S207 via step S206. Since it is determined in step S207 that a spouse is acquired, the process returns to step S202. Then, the CPU 101 generates child characters in step S203, and adds them to the management data. After that, the game similarly progresses in association with a new family.

The detailed sequence of the event determination processing in step S205 in Fig. 2 will be described below with reference to Fig. 10. Since there are various kinds of events, only some events will be described below. As is easily understood by those who are skilled in the art, various kinds of event processing can be implemented by modifying the flowchart of Fig. 10 as needed.

The CPU 101 checks in step S1001 if an arbitrary event generation condition is satisfied. An event is generated, for example, "when a predetermined period of time has elapsed", "when the player inputs a predetermined instruction via the operation unit 103", "when a predetermined time has been reached", and so forth. The CPU 101 can measure an elapse of time or can check if a predetermined time is reached, using a timer (not shown) or timepiece (not shown). If the condition is satisfied, the process advances to step S1002, S1003, or S1004 depending on the contents of the satisfied condition (i.e., the contents of an event to be generated). If the condition is not satisfied, the event determination processing ends.

In this embodiment, assume that a character grows every time a predetermined period of time has elapsed. Every time the predetermined period of time has elapsed, the CPU 101 changes the value of the growth stage field 501 shown in Fig. 5 in step S1002. For example, as the growth stage at the beginning of the game, the parent characters are in the laying period, and the child characters are in the infancy period (indicated by "laying period/infancy period" in Fig. 5). When 60 minutes have elapsed from the beginning of the game, the grow stage changes to "parent period/rebellious period". When 48 hours have elapsed, the growth stage changes to "parent period/puberty". When next 48 hours have elapsed, the growth stage changes to "parent period/laying period". As described above, the child character can marry in this stage (that is, the child character can be selected in step S607 or S613).

Upon changing the growth stage of characters, the personality type of the current family may be determined with reference to the fields indicating the personalities of respective characters in the management data. For example, in this embodiment, since the numerical value of the "meticulous" field of character #3 shown in Fig. 4 is "55", which is larger than the numerical value "40" of the "lively" field and the numerical value "30" of the "easygoing" field, it is determined that character #3 has a "meticulous" personality. Since the numerical value of the "lively" field of character #4 is "55", which is larger than those of the remaining "meticulous" and "easygoing" fields, it is determined that character #4 has a "lively" personality. Furthermore, since the numerical value of the "meticulous" field of character #5 is "55", which is larger than those of the remaining "lively" and "easygoing" fields, it is determined that character #5 has a "meticulous" personality. As described above, since one of the three characters has a personality different from the remaining two characters, it is determined that the type of the current family is "multi-personality". On the other hand, for example, when the numerical values of the "meticulous" fields of respective characters are larger than those in the remaining "lively" and "easygoing" fields, since it is determined that all the characters have a "meticulous" personality and indicate an identical personality, it is determined that the type of the current family is "meticulous". In this example, the personality type of the current family is determined with reference to only the fields of the children. However, the personality type may be determined by referring to the fields as well as those of the parents.

When the player inputs an instruction to serve a meal via the operation unit 103, the CPU 101 increments the value of the stomach field 503 shown in Fig. 5 in step S1003.

When a predetermined time (e.g., 3 p.m.) of a day has been reached, the CPU 101 outputs a calling sound from the loudspeaker 108 or displays a calling message on the display unit 106 to call the player in step S1004. This calling corresponds to that for the player by the child characters. The CPU 101 checks if the player responds within a predetermined period of time via the operation unit 103. If the player responds, the process advances to step S1005, and the CPU 101 increments the value of the bond field 502 in Fig. 5. However, if the player does not respond, the process advances to step S1006, and the CPU 101 decrements the value of the bond field 502.

In step S1007, the CPU 101 displays a window according to the contents of the event (e.g., a window indicating that the child characters take a meal) on the display unit 106.

The description associated with the events has been given. As described above, various other events, for example, an event that increments or decrements the value of the mood field 504, a sleep event of the child characters, and the like, may take place.

Note that when a program for making a computer execute the aforementioned processes (for example, those according to the flowcharts shown in Figs. 2, 6, 9, and 10 in the above embodiment) is recorded on a computer-readable recording medium such as a CD-ROM, DVD-ROM, MO, or the like, and the computer reads out (installs or copies) the program recorded on this recording medium, the computer can implement the aforementioned processes. Therefore, such program and the computer-readable recording medium that records the program fall within the scope of the present invention.

As described above, the game apparatus 100 according to this embodiment holds a character group including parent characters and child characters. The game apparatus 100 can communicate with another game apparatus. By making communication, the game apparatus 100 changes the parameter value (chum level) indicating the relationship between its own character group and that of the game apparatus as a communication partner. When the parameter value satisfies a predetermined condition, the game apparatus 100 can acquire a spouse character from the other game apparatus for the child character to make their marriage happen. When the spouse character is taken and the marriage is concluded, the game apparatus 100 clears characters other than the characters to marry from the character group.

As described above, according to this embodiment, the player can make his or her own game apparatus communicate with another game apparatus to receive a character from the other game apparatus. After the character is received, the player can continue the game using a character group of a new generation.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

This application claims the benefit of Japanese Patent Application No. 2007-192628, filed on July 24, 2007, which is hereby incorporated by reference herein in its entirety.

## Claims

1. A game apparatus, which comprises a storage unit and a communication unit which communicates with another game apparatus, comprising:
a first storage control unit which controls the storage unit to store a character group including two characters of a first type and one or more characters of a second type;
a second storage control unit which controls the storage unit to store a parameter value indicating a relationship between the character group and a character group of the other game apparatus;
a first update unit which updates the parameter value when a communication with the other game apparatus is made;
a first selection unit which selects one of the one or more characters of the second type as a character that remains at the character group;
a first determination unit which determines whether or not the parameter value satisfies a predetermined condition;
a character generation unit which generates one or more new characters of the second type; and
a second update unit which updates the character group so as to set, when said first determination unit determines that the parameter value satisfies the predetermined condition and when said first selection unit makes the selection, the character selected by said first selection unit and a predetermined character of the second type of the other game apparatus as the new, two characters of the first type, and to set only one or more characters of the second type newly generated by said character generation unit as the one or more characters of the second type.

2. The apparatus according to claim 1, wherein the character selected by said first selection unit and the predetermined character of the second type respectively have a first attribute or a second attribute,
said apparatus further comprises a second determination unit which determines whether or not an attribute of the character selected by said first selection unit is different from an attribute of the predetermined character of the second type, and
wherein said second update unit updates the character group when said second determination unit determines that the attribute of the character selected by said first selection unit is different from the attribute of the predetermined character of the second type.

3. The apparatus according to claim 1 or 2, further comprising:
a second selection unit which selects one of the one or more characters of the second type as a character to be given away to the other game apparatus; and
a clear unit which clears, when said first determination unit determines that the parameter value satisfies the predetermined condition, and said second selection unit makes the selection, the character selected by said second selection unit from the character group.

4. The apparatus according to claim 3, wherein said clear unit clears the character when the character group includes two or more characters of the second type.

5. The apparatus according to any one of the preceding claims, wherein said first update unit updates the parameter value to indicate the number of times of the communications with the other game apparatus, and
said first determination unit determines that the parameter value satisfies the predetermined condition when the parameter value is not less than a threshold.

6. The apparatus according to claim 5, wherein said second update unit resets the parameter value to zero.

7. The apparatus according to any one of the preceding claims, further comprising an acquisition unit which acquires identification information of the other game apparatus from the other game apparatus,
wherein said second storage control unit stores the parameter value in association with the identification information acquired by said acquisition unit.

8. The apparatus according to any one of the preceding claims, further comprising a third storage control unit which controls the storage unit to store growth stage information indicating a stage of growth of the one or more characters of the second type,
wherein said second update unit updates the character group when the growth stage information indicates a predetermined stage.

9. The apparatus according to claim 8, further comprising a third update unit which updates the growth stage information along with an elapse of time.

10. The apparatus according to any one of the preceding claims, wherein when said character generation unit generates new, two or more characters of the second type, the two or more characters of the second type include a character having a first attribute and a character having a second attribute.

11. A method of controlling a game apparatus, which comprises a storage unit and a communication unit which communicates with another game apparatus, said method comprising the steps of:
controlling the storage unit to store a character group including two characters of a first type and one or more characters of a second type;
controlling the storage unit to store a parameter value indicating a relationship between the character group and a character group of the other game apparatus;
updating the parameter value when a communication with the other game apparatus is made;
selecting one of the one or more characters of the second type as a character that remains at the character group;
determining whether or not the parameter value satisfies a predetermined condition;
generating one or more new characters of the second type; and
updating the character group so as to set, when it is determined in the step of determining that the parameter value satisfies the predetermined condition and when the selection is made in the step of selecting, the character selected in the step of selecting and a predetermined character of the second type of the other game apparatus as the new, two characters of the first type, and to set only one or more characters of the second type newly generated in the step of generating as the one or more characters of the second type.

12. A computer program, comprising program code means which, when executed on a computer system, instructs the computer system to perform the method of claim 11.

13. A computer program stored in a computer-readable storage medium to make a computer, which comprises a storage unit and a communication unit which communicates with another game apparatus, function as:
a first storage control unit which controls the storage unit to store a character group including two characters of a first type and one or more characters of a second type;
a second storage control unit which controls the storage unit to store a parameter value indicating a relationship between the character group and a character group of the other game apparatus;
a first update unit which updates the parameter value when a communication with the other game apparatus is made;
a first selection unit which selects one of the one or more characters of the second type as a character that remains at the character group;
a first determination unit which determines whether or not the parameter value satisfies a predetermined condition;
a character generation unit which generates one or more new characters of the second type; and
a second update unit which updates the character group so as to set, when said first determination unit determines that the parameter value satisfies the predetermined condition and when said first selection unit makes the selection, the character selected by said first selection unit and a predetermined character of the second type of the other game apparatus as the new, two characters of the first type, and to set only one or more characters of the second type newly generated by said character generation unit as the one or more characters of the second type.
